Europäisches Patentamt

European Patent Office

Office européen des brevets

(11) Numéro de publication : **0 313 479 B1**

(19)

(12) # FASCICULE DE BREVET EUROPEEN

(45) Date de publication du fascicule du brevet :
**18.09.91 Bulletin 91/38**

(51) Int. Cl.$^5$ : **F23D 14/18, F23D 14/38, B23K 3/02**

(21) Numéro de dépôt : **88420349.8**

(22) Date de dépôt : **14.10.88**

(54) **Appareil chauffant avec brûleur catalytique.**

(30) Priorité : **20.10.87 FR 8714747**

(43) Date de publication de la demande :
**26.04.89 Bulletin 89/17**

(45) Mention de la délivrance du brevet :
**18.09.91 Bulletin 91/38**

(84) Etats contractants désignés :
**AT BE CH DE ES FR GB IT LI NL SE**

(56) Documents cités :
**DE-A- 2 732 365**
**DE-A- 3 526 925**
**FR-A- 2 559 694**
**FR-A- 2 582 384**

(73) Titulaire : **APPLICATION DES GAZ**
**173, rue de Bercy**
**F-75012 Paris (FR)**

(72) Inventeur : **Pivot, Jean-Claude**
**Montbel**
**F-69390 Vourles (FR)**
Inventeur : **Bottazzi, Philippe**
**35 Avenue de Limburg**
**F-69110 Sainte Foy Les Lyon (FR)**

(74) Mandataire : **Guerre, Dominique et al**
**CABINET GERMAIN et MAUREAU Le**
**Britannia Tour C 20 Bd E. Deruelle**
**F-69392 Lyon Cédex 03 (FR)**

## Description

La présente invention concerne un appareil chauffant avec brûleur catalytique, lequel fonctionne avec un gaz combustible sous pression et uniquement de l'air primaire induit, sans aération secondaire au niveau du catalyseur.

Selon le brevet FR-A-2559694, on a décrit un appareil chauffant du genre défini précédemment, et plus précisément un fer à souder portatif, incorporant un réservoir rechargeable pour le gaz combustible, par exemple du butane. Un tel appareil comprend, dans le sens de circulation du gaz combustible :

— un double organe de contrôle du courant gazeux en provenance du réservoir rechargeable, constitué, d'une part par une valve commandée en ouverture ou fermeture par un mécanisme approprié, et d'autre part par un organe de réglage du débit gazeux sortant de la valve, lorsque cette dernière est ouverte ;

— un injecteur éjectant un jet gazeux à partir du courant gazeux sortant du double organe de contrôle

— un moyen d'entrainement d'air primaire par le jet gazeux, pour former un mélange à brûler circulant dans un conduit ;

— un brûleur à flamme nue, situé à l'extrémité du conduit précédent, comprenant un organe d'accrochage de ladite flamme ;

— un tube de liaison reliant la sortie du brûleur à flamme nue avec l'entrée du brûleur catalytique, comportant des ouvertures, à la fois pour le passage de l'air secondaire nécessaire à la flamme nue, et pour allumer le brûleur à flamme ; ces ouvertures sont associées à un volet d'obturation, amovible en translation, et commandé par l'utilisateur ;

— un brûleur catalytique proprement dit, comportant un noyau réfractaire, c'est-à-dire résistant à la chaleur, traversé selon la direction du mélange à brûler, de sa face d'entrée à sa face de sortie, par une pluralité de canaux dont la surface interne est revêtue par un catalyseur de combustion approprié ;

— un capuchon, pourvu d'orifices d'évacuation des gaz brûlés, fermant la sortie du brûleur catalytique ; ce capuchon métallique est en relation d'échange thermique avec le brûleur, et sert, grâce à une forme appropriée, de panne à souder.

L'allumage d'un tel appareil s'effectue de la manière suivante :

— en manoeuvrant l'organe de réglage du débit gazeux, et séparément la commande de la valve, on alimente le brûleur à flamme nue avec un mélange riche en gaz combustible

— en dégageant le volet d'obturation des ouvertures du tube de liaison, d'une part on favorise l'allumage du brûleur à flamme nue par l'arrivée d'air secondaire, et d'autre part on peut allumer le même brûleur par la flamme d'un briquet par exemple, introduite dans l'une de ces ouvertures ;

— la face d'entrée du noyau réfractaire du brûleur catalytique est chauffée par l'extrémité de la flamme nue ;

— lorsque le noyau réfractaire est à température voulue, l'utilisateur commande en fermeture les ouvertures du tube de liaison, avec le volet d'obturation ; le brûleur à flamme nue s'éteint, et le mélange alimentant ce dernier circule de la sortie du brûleur à flamme nue à l'entrée du brûleur catalytique, grâce au tube de liaison ;

— le noyau réfractaire étant à la température de travail du matériau catalytique, le brûleur catalytique entre en fonctionnement ; les fumées de combustion, et le contact thermique du capuchon métallique avec le brûleur catalytique échauffent la panne, laquelle est alors prête à l'emploi.

Un tel mode d'allumage présente différents inconvénients importants.

Tout d'abord, la présence d'un brûleur à flamme nue, dans le chemin du gaz combustible, de l'injecteur vers le brûleur catalytique, rend la construction de l'appareil particulièrement complexe.

Ensuite, le système à volet d'obturation du tube de liaison peut conduire à différentes fausses manoeuvres :

— l'utilisateur peut ne pas ouvrir ce volet, et tenter un allumage au niveau des orifices d'évacuation des gaz brûlés du capuchon ; il n'y arrivera pas, et néanmoins le mélange à brûler continuera de s'échapper de l'appareil ;

— l'utilisateur peut refermer trop tôt ce volet, à un moment où le brûleur catalytique n'est pas suffisamment chaud pour s'allumer ; ou il devra recommencer sa manoeuvre, ou il ne se rendra pas compte du non-fonctionnement, toujours avec échappement du mélange à brûler ;

— le volet peut rester ouvert, à l'insu de l'utilisateur, ou sous sa commande, auquel cas le brûleur à flamme restera en fonctionnement, sans pour autant allumer le brûleur catalytique, tout le mélange à brûler étant consommé au niveau du brûleur à flamme ; dans ce cas, d'une part le catalyseur peut être définitivement détérioré, compte tenu de la surchauffe à laquelle il est soumis, et d'autre part les flammes s'échappant par les ouvertures du conduit de liaison peuvent échauffer de manière dommageable les pièces sur lesquelles on travaille, par exemple un circuit électronique.

La présente invention a pour objet un appareil chauffant tel que défini précédemment, pouvant être allumé par l'utilisateur, de manière simple, et sans fausse manoeuvre.

Selon la présente invention, en combinaison :

2

— d'une part, l'entrée du brûleur catalytique (8) communique directement avec la sortie de l'injecteur (4), par un tube de liaison continu et étanche, sauf au niveau de l'injecteur où se situe le moyen d'entraînement (6) d'air primaire

— et d'autre part, des moyens de freinage dynamique permettent d'obtenir à la sortie du brûleur catalytique, dans un plan axial passant par la direction de sortie du noyau réfractaire, un profil de vitesse différencié, présentant au moins un creux au voisinage de la face de sortie dudit noyau réfractaire ; ces moyens de freinage dynamique consistent, soit en une chicane disposée en amont du brûleur, transversalement, en regard de la face d'entrée du noyau réfractaire, ladite chicane comportant une partie pleine correspondant (à la sortie du brûleur catalytique) au creux du profil de vitesse, et une partie perforée pour le passage du mélange à brûler vers le brûleur catalytique,soit en un obstacle placé en aval dudit brûleur, en regard du débouché d'un ou plusieurs canaux du noyau, soit en une différenciation des canaux du noyau réfractaire selon leur perte de charge, au moins un canal ayant une perte de charge relativement importante.

Comme toute homme de métier dans la combustion le sait, l'existence d'une flamme stable suppose une égalité entre la vitesse linéaire de circulation du mélange gazeux à brûler, et la vitesse en sens inverse de propagation de la même flamme. Et la conception d'un brûleur à flamme consiste en particulier à localiser à la sortie du brûleur la surface pour laquelle l'égalité précédente sera respectée. Si cette égalité n'est plus respectée à la sortie du brûleur, les phénomènes suivants, bien connus du même homme de métier, se produisent alors :

— si la vitesse de combustion excède la vitesse de circulation du mélange, alors la flamme pénètre à l'intérieur du brûleur, pouvant entraîner une combustion interne au niveau de l'injecteur, préjudiciable à l'appareil ;

— si la vitesse de circulation du mélange excède la vitesse de combustion, alors la flamme décolle du brûleur, ce qui entraîne une flamme instable, susceptible de s'éteindre ; et alors l'allumage ou le ré-allumage du brûleur est particulièrement difficile, voire impossible.

En considérant le brûleur catalytique selon l'invention, au moment de l'allumage, le mélange à brûler sort du noyau réfractaire par les différents canaux. L'existence d'un creux de vitesse au voisinage de la surface de sortie du même noyau réfractaire, permet de localiser à la sortie du brûleur catalytique une surface limitée ou ponctuelle, située au débouché des canaux en regard du creux de vitesse, pour laquelle après l'allumage le front de flamme correspondant est au contact thermique de la sortie du catalyseur. Sans les moyens de freinage dynamique selon l'invention, un tel front de flamme peut exister, mais il est à distance de la sortie du brûleur catalytique, ce qui ne permet pas une montée rapide en température de ce dernier.

Par conséquent, sur la surface limitée ou ponctuelle précédente, il est possible d'accrocher une flamme, en contact thermique avec le noyau réfractaire.

Cette flamme échauffe progressivement le noyau réfractaire jusqu'à atteindre la température d'activation du matériau catalytique. Dès cet instant, la combustion du mélange combustible/air primaire va se produire à l'intérieur du noyau réfractaire, en consommant tout le combustible disponible. Dès lors, la flamme d'allumage va s'éteindre, et le brûleur catalytique fonctionner ; en quelque sorte, la flamme d'allumage aval rentre, sans intervention extérieure, au sein du brûleur catalytique, lequel prend alors le relais de la combustion du mélange.

On est donc en présence d'une procédure d'allumage extrémement simple, et dont le séquencement est quasi-automatique, et en tout cas ne requiert aucune intervention de l'utilisateur, en dehors de l'allumage initial à la sortie du brûleur catalytique.

Et cette procédure simple n'entraîne aucune complication, bien au contraire, dans la construction d'un appareil chauffant selon l'invention.

Par ailleurs, en fonctionnement, tout le combustible étant consommé par le brûleur catalytique, plus aucune flamme permanente ne peut exister sur l'appareil, notamment en aval du brûleur catalytique. Ceci contribue à la sécurité de l'utilisateur.

Appliquée à un fer à souder, l'invention apporte un autre avantage, car la température d'amorçage du brûleur catalytique correspond sensiblement à la température de travail de la panne. Par conséquent, dès que la flamme aval s'éteint, l'utilisateur est assuré que la panne de soudage est arrivée à sa température de travail ou soudure.

La présente invention est maintenant décrite par référence aux dessins annexés, dans lesquels :

— la figure 1 représente une vue en coupe axiale d'un appareil chauffant conforme à la présente invention, la partie supérieure de cette figure montrant l'appareil accouplé à une cartouche d'un gaz combustible sous pression, par exemple du butane, et la partie inférieure montrant le même appareil, désaccouplé par rapport à la cartouche ;

— la figure 2 représente, à échelle agrandie et en coupe axiale, le brûleur catalytique faisant partie de l'appareil montré à la figure 1 ;

— la figure 3 représente une vue en coupe du brûleur catalytique, selon la ligne III-III montrée à la figure 2 ;

— la figure 4 représente une vue à échelle agrandie, en coupe selon la ligne IV-IV de la figure 2, du moyen de freinage dynamique faisant partie du brûleur catalytique montré à la figure 2 ;

— la figure 5 est une représentation schématique du brûleur catalytique conforme aux figures 1 à 4, explicitant le principe de fonctionnement et d'allumage du même brûleur ;

— la figure 6 représente de manière schématique et en coupe axiale, un autre appareil chauffant conforme à la présente invention, servant de fer à friser.

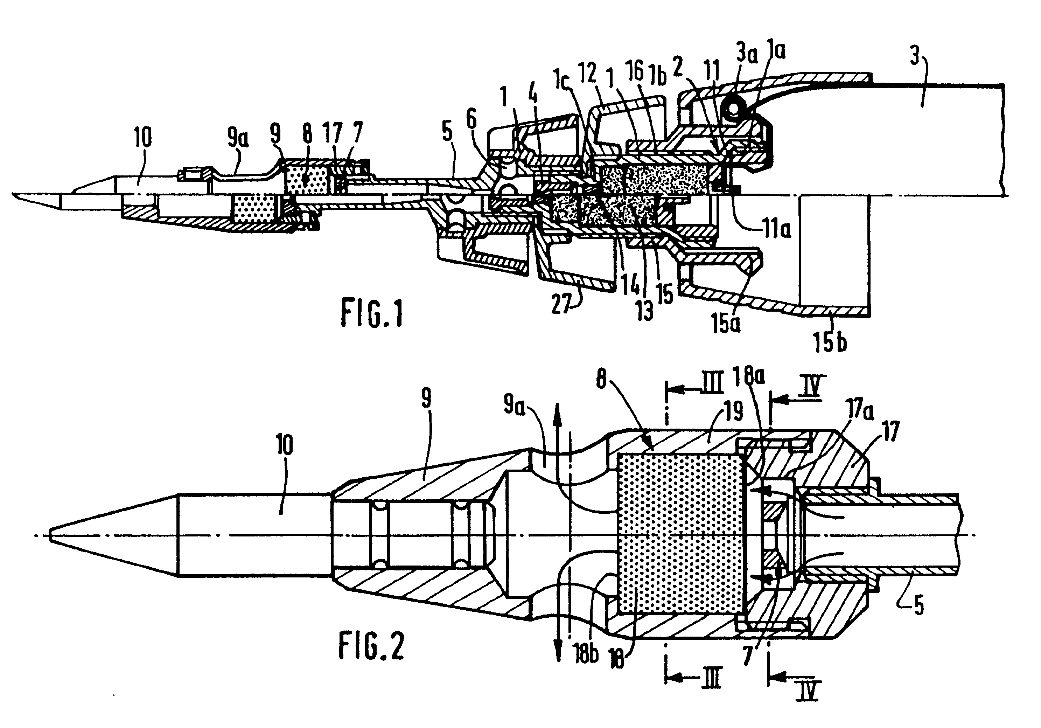

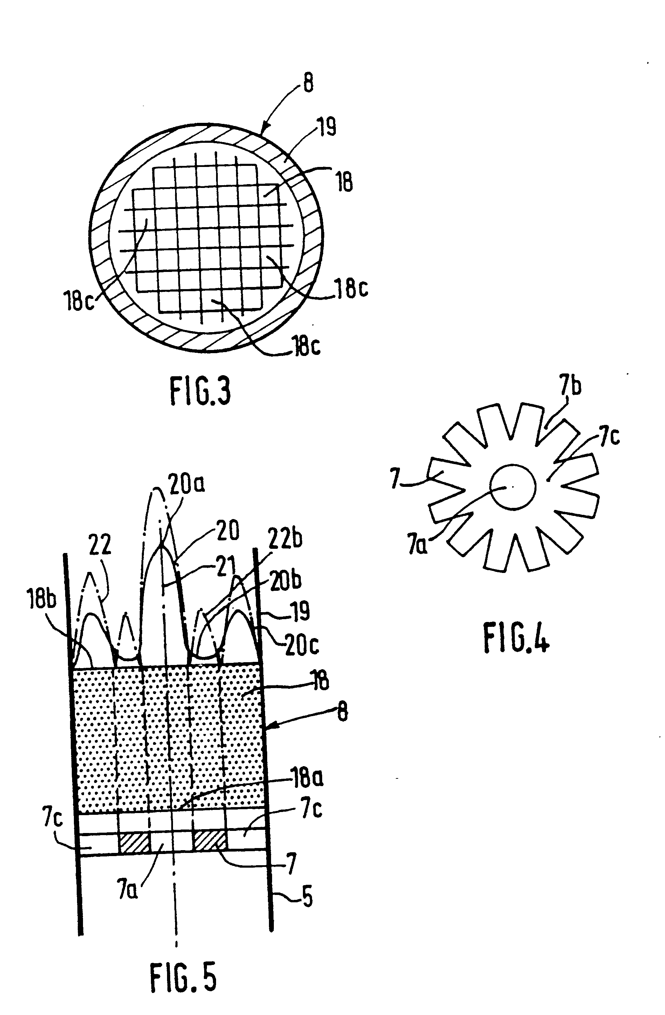

Conformément aux figures 1 à 5, un appareil chauffant conforme à la présente invention, consistant en un fer à souder portatif,comprend les éléments ou organes principaux suivants :

— un corps (1)

— un moyen d'accouplement (2) du corps (1) avec une cartouche (3) de gaz combustible sous pression, par exemple du butane, équipée d'une valve de prélévement non représentée ; ce moyen d'accouplement permet, de manière résersible, d'une part de solidariser le corps (1) de l'appareil à la cartouche (3), et d'autre part d'ouvrir la valve de cette dernière, avec étanchéité par rapport à l'extérieur, entre la valve ouverte et le corps (1) ; comme indiqué ci-après, le moyen d'accouplement (2) sert en même temps d'organe de contrôle du courant gazeux sortant de la cartouche (3) ;

— un injecteur (4) éjectant un jet gazeux à partir du courant de gaz combustible circulant dans le corps (1) ;

— un tube de liaison (5) continu et étanche,sauf au niveau de l'injecteur (4),où se situe un moyen (6) d'entrainement d'air primaire ; dès lors, dans le conduit (5) circule en fonctionnement un mélange à brûler, constitué du gaz combustible sous pression et de l'air induit ;

— des moyens (7) de freinage dynamique du mélange à brûler, disposés et associés en amont du brûleur catalytique (8) défini ci-après ;ces moyens sont disposés à l'extrémité aval du tube de liaison (5) ;

— le brûleur catalytique (8) proprement dit, dont l'entrée communique donc directement avec la sortie de l'injecteur (4), par le tube de liaison (5);

— un capuchon (9) métallique, pourvu d'orifices d'évacuation (9a) des gaz brûlés, fermant la sortie du brûleur catalytique (8) ;

— une panne à souder (10), solidaire et montée sur le capuchon métallique (9).

Tous les éléments et organes précédents ont été introduits successivement, en suivant le sens de circulation du gaz combustible à partir de la cartouche (3). Le corps (1) a une forme creuse, présentant une symétrie de révolution par rapport à l'axe, et différentes sections de diamètres décroissants de l'extrémité amont vers l'extrémité aval, en suivant le sens de circulation du gaz combustible.

A l'intérieur d'une première section (1a) de diamètre important est vissé un bouchon (11) présentant vers l'extérieur un téton (11a) d'ouverture de la valve de la cartouche (3) et de prélévement du gaz dans cette dernière. Une deuxième section (1b) de diamètre plus faible est filetée extérieurement. Sur une dernière section (1c) de diamètre encore plus faible, est montée, de manière fixe en rotation, une collerette de manoeuvre (12) ; c'est sur cette section (1c) que l'injecteur (4) est monté par vissage.

Dans le volume intérieur délimité par la paroi du corps (1) et le bouchon (11) sont disposés une charge (13) de charbon actif, de manière à piéger les impuretés du gaz combustible, susceptibles d'obturer l'injecteur (4), ou de perturber le fonctionnement du brûleur catalytique, et un filtre (14) créant une perte de charge limitant le débit au niveau de l'injecteur.

Le moyen d'accouplement (2) de l'appareil avec la cartouche (3) est conforme à celui décrit et revendiqué dans la demande de brevet français publiée sous le n° 2407423, au nom de la présente Demanderesse.

Une bague filetée (15) est montée de manière inamovible à l'extérieur de la section (1b) du corps (1), et comporte des dents (15a) susceptibles de s'encliqueter sous un bourrelet annulaire (3a) de la cartouche (3), présent au niveau de la valve de cette dernière. Cette bague (15) est solidaire d'un cache (15b) de protection, recouvrant la partie supérieure de la cartouche (3), lorsque cette dernière est accouplée à l'appareil. Grâce à la collerette de manoeuvre (12), on peut dévisser le corps (1) par rapport à la bague (15), jusqu'à butée de la section (1a) contre la même bague. Dès ce moment, les dents (15a) étant mobiles radialement vers l'axe de l'appareil, celles-ci peuvent être encliquetées sous le bourrelet annulaire (3a) de la cartouche (3). En revissant le corps (1), toujours avec la collerette de manoeuvre (12), la section (1a) du corps (1) descend au niveau des dents (15a), à l'arrière de ces dernières ; ceci solidarise la bague (15) avec le bourrelet (3a) de la cartouche (3), puisque les dents (15a) sont bloquées par la section (1a) contre le bourrelet (3a), sans possibilité de retrait élastique vers l'axe de l'appareil.

Le tube de liaison (5) est vissé sur la section (1c) du corps (1). Son profil interne est relativement large, au niveau des ouvertures radiales (6) d'arrivée d'air primaire, rétréci en aval de ces dernières, puis se réélargit vers la sortie du tube (5). Ce profil interne, par effet venturi, permet d'induire et d'entraîner de l'air primaire, par les ouvertures (6), et de mélanger celui-ci avec le jet de gaz combustible éjecté de l'injecteur (4).

En dehors des ouvertures (6), ce tube de liaison (5) est complétement continu et étanche par rapport à l'extérieur. Une bague de réglage (27)est montée mobile en rotation sur la partie inférieure du tube (5), et permet d'obturer partiellement les orifices (6) d'entrainement d'air primaire, en particulier au moment de l'allumage de l'appareil, comme décrit ci-après.

Un raccord (17) est disposé à l'extrémité aval du tube de liaison (5), par exemple par vissage. Le moyen (7) de freinage dynamique est disposé axialement dans un logement transversal (17a) prévu dans le raccord (17). Ce moyen (7) consiste en une chicane en forme de rondelle, disposée transversalement par rapport à l'axe de l'appareil, en regard de la face d'entrée (18a) du noyau réfractaire (18) dont il sera question ci-après.

Conformément à la figure 4, cette rondelle comporte une partie centrale ou axiale perforée (7a), une pluralité de découpes périphériques (7b), ayant chacune en profil la forme d'un V, et une partie pleine (7c) entre la perforation centrale (7a) et les découpes (7c). Si on néglige les parties pleines présentes entre les découpes (7b), la partie pleine (7c) peut être assimilée à une couronne.

Le brûleur catalytique (8) est délimité par une paroi (19) ayant une forme de révolution autour de l'axe de l'appareil, vissée d'un côté sur le raccord (17), et formant de l'autre côté le capuchon (9) défini précédemment.

La paroi (19), avec le raccord (17) forment un logement pour le noyau (18) en matériau réfractaire, par exemple en céramique, ayant une structure en nid d'abeille. Par conséquent, le noyau (18) est traversé, selon la direction du mélange à brûler, de sa face d'entrée (18a) à sa face de sortie (18b), par une pluralité de canaux (18c), dont la surface interne est revêtue par un catalyseur de combustion.

Le capuchon (9) est solidaire de la paroi (19) du brûleur catalytique (8) et les gaz de combustion sont évacués par les orifices (9a). Ce capuchon ferme donc la sortie (18b) du brûleur catalytique. La panne à souder (10) est montée par emmanchement dans un orifice axial du capuchon (9).

Le fonctionnement d'un dispositif ou appareil tel que précédemment décrit est le suivant.

Tout d'abord, une cartouche (3) est accouplée à l'appareil conformément à la description précédente, c'est-à-dire en dévissant le corps (1) par rapport à la bague (15), puis en revissant ces deux éléments l'un par rapport à l'autre. Dès lors, la valve de la cartouche (3) est ouverte, et un chemin étanche est établi entre l'intérieur de la cartouche, par la valve ouverte, et l'intérieur du corps (1). Aucun autre organe de réglage du courant gazeux issu de la cartouche (3) n'est prévu, l'appareil fonctionnant en tout ou rien : c'est l'accouplement avec la cartouche qui établit la circulation d'un courant gazeux vers le brûleur catalytique (8), et inversement c'est le désaccouplement qui interrompt cette circulation, la valve de la cartouche servant de clapet d'ouverture et de fermeture de l'ensemble appareil/cartouche.

Une fois la cartouche accouplée à l'appareil, le jet gazeux issu de l'injecteur (4) entraîne l'air induit par les ouvertures (6), pour constituer un mélange homogène à brûler, circulant par le conduit (5) vers le moyen de freinage (7) et le brûleur catalytique (8).

Par passage au travers de la chicane (7), le mélange à brûler est divisé en une pluralité de veines périphériques correspondant aux découpes (7b) et une veine axiale correspondant à la perforation centrale (7a). Derrière la couronne (7c) on obtient une veine annulaire ayant une vitesse moyenne beaucoup plus faible que les veines (7a) et (7b). En aval de la chicane (7), la vitesse de circulation des différentes veines gazeuses définies précédemment n'est pas substantiellement modifiée par le passage dans les différents canaux (18c) du noyau (18), les pertes de charge selon l'axe de l'appareil étant sensiblement identiques au sein du noyau (18). En conséquence, à la sortie (18b) du noyau réfractaire (18), on obtient le profil de vitesse (20) représenté en traits pleins à la figure 5.

Ce profil (20) est différencié, en ce sens que selon la distance par rapport à l'axe (21) de l'appareil, la forme du profil de vitesse (20) n'est pas la même. Plus précisément, conformément à la figure 5, ce profil (20) comporte de l'axe (21) vers l'extérieur du brûleur (18) un pic axial (20a), un creux (20b), distribué selon une couronne à distance de l'axe (21) de sortie du brûleur (8), et enfin un autre pic (20c), de moindre hauteur que le pic (20a), également distribué de manière annulaire par rapport l'axe (21). Le creux de vitesse (20b) défini précédemment correspond donc à la partie pleine (7c) de la chicane (7). Comme le montre la figure 5, ce creux (20b) est situé au voisinage ou sur la face de sortie (18b) du noyau réfractaire (18).

Selon les figures 1 à 5, le profil de vitesse conforme à la ligne pleine (20) est obtenu en disposant des moyens de freinage dynamique (7) en amont du noyau réfractaire (18), selon le sens de circulation du gaz combustible. Un profil identique ou comparable peut être obtenu par d'autres moyens, et de manière différente :

— tout d'abord, les moyens de freinage dynamique peuvent être disposés en aval du noyau réfractaire (18), selon le sens de circulation du gaz combustible, par exemple sous la forme d'un obstacle en regard du débouché d'un ou plusieurs canaux (18c) du noyau (18) ;

— on peut également différencier les canaux (18c) du noyau réfractaire (18), selon leur perte de charge, au moins un canal (18c) ayant une perte de charge relativement importante, pour correspondre au creux de vitesse (20b) du profil de sortie (20).

Au moment de l'allumage, grâce au profil des vitesses de sortie du mélange à brûler, à la sortie du brûleur catalytique (8), il est possible d'allumer une flamme (22), représentée en traits pleins séparés par des pointillés à la figure 5, de profil similaire au profil de vitesse. La partie annulaire (22b) de la flamme (22) s'accroche sur ou au voisinage de la face de sortie (18b) du noyau réfractaire.

Les considérations théoriques exposées dans le préambule de la description permettent de comprendre l'existence de cette flamme annulaire.

Dès que cette flamme (22) apparaît, alors le corps réfractaire (18) s'échauffe, jusqu'à atteindre une température de mise en régime du catalyseur de combustion. Dès que cette température est atteinte, ce qui se traduit en général par un rougeoiement du noyau (18), le mélange gazeux est brûlé sans flamme au sein du brûleur catalytique (8), de telle sorte que la flamme (22) s'éteint, l'utilisateur ayant l'impression que cette flamme (22) rentre à l'intérieur du brûleur catalytique (8). Dès ce moment, le capuchon (9) est alors porté, avec la panne (10), à une température de travail convenable, ce qui permet à l'utilisateur de travailler avec l'appareil.

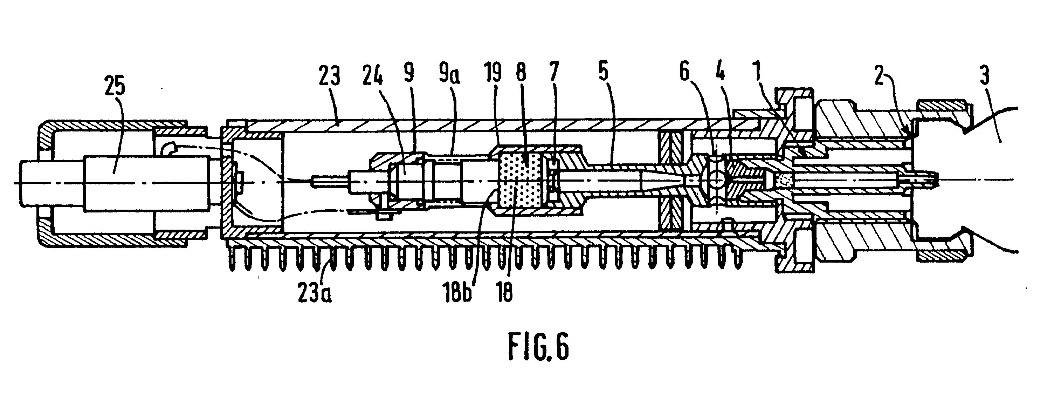

Conformément à la figure 6, on utilise le même brûleur catalytique, dans le cadre d'un autre appareil chauffant, à savoir un fer à friser, lequel comporte une enveloppe (23) avec des éléments (23a) formant peigne. Les références numériques précédemment introduites et reprises sur la figure 6, désignent des éléments ou organes identiques, ou ayant les mêmes fonctions que celles définies précédemment.

Cet appareil diffère de l'appareil précédent, outre son application différente, par les points suivants :

— une grille est disposée dans l'ouverture des perforations (9a) ;

— une électrode d'allumage (24) est disposée à l'intérieur du capuchon (9), en regard de la sortie (18b) du brûleur catalytique (8) ; cette bougie est activée par un mécanisme piezo-électrique (25) présent par ailleurs sur l'appareil ;

— le brûleur catalytique (8) est disposé au sein de l'enveloppe extérieure (23), de manière co-axiale, de telle sorte que cette dernière est léchée par les gaz de combustion.

La présente invention peut recevoir application sur toutes sortes d'appareils chauffant, en particulier ceux qui doivent être fréquemment déplacés, au rang desquels on peut citer :

— certains appareils ménagers, comme un grille-pain, une cafetière, un fer à repasser, etc...

— des appareils destinés à la salle de bains, tels qu'un fer à friser, un sèche cheveux, un épilateur, etc...

— et divers appareils de bricolage tels que le fer à souder décrit précédemment, pistollet à colle, mais aussi un pistolet air chaud, etc...

## Revendications

1. Appareil chauffant, avec brûleur catalytique (8) d'un gaz combustible sous pression, comprenant successivement, dans le sens de circulation du gaz :

— un organe de contrôle (2) du courant gazeux ;

— un injecteur (4) éjectant un jet gazeux à partir du courant gazeux ;

— un moyen d'entraînement (6) d'air primaire par le jet gazeux, pour former un mélange à brûler ;

— ledit brûleur catalytique (8), comportant un noyau réfractaire (18), traversé selon la direction du mélange à brûler, de sa face d'entrée (18a) à sa face de sortie (18b), par une pluralité de canaux (18c) dont la surface interne est revêtue par un catalyseur

**caractérisé en ce que**, en combinaison, d'une part l'entrée du brûleur catalytique (8) communique directement avec la sortie de l'injecteur (4), par un tube (5) de liaison continue et étanche, sauf au niveau dudit injecteur, où se situe le moyen d'entraînement (6) d'air primaire ; et d'autre part, des moyens (7) de freinage dynamique sont disposés en amont du brûleur catalytique (8), pour obtenir à la sortie (18b) de ce dernier, dans un plan axial (Fig. 5) passant par la direction de sortie du noyau (18) réfractaire, un profil de vitesse (20) différencié, présentant au moins un creux (20b) au voisinage de la face de sortie (18b) dudit noyau réfractaire (18), lesdits moyens de freinage dynamique (7) consistant en une chicane disposée transversalement, en regard de la face d'entrée (18a) du noyau réfractaire (18), ladite chicane comportant une partie pleine (7c) correspondant (à la sortie du brûleur catalytique) au creux (20b) du profil de vitesse (20), et une partie perforée (7a, 7b) pour le passage du mélange à brûler vers le brûleur catalytique (8).

2. Appareil chauffant, avec brûleur catalytique (8) d'un gaz combustible sous pression, comprenant successivement, dans le sens de circulation du gaz :

— un organe de contrôle (2) du courant gazeux ;

— un injecteur (4) éjectant un jet gazeux à partir du courant gazeux ;

— un moyen d'entraînement (6) d'air primaire par le jet gazeux, pour former un mélange à brûler ;

— ledit brûleur catalytique (8), comportant un noyau réfractaire (18), traversé selon la direction du mélange à brûler, de sa face d'entrée (18a) à sa face de sortie (18b), par une pluralité de canaux (18c) dont la surface interne est revêtue par un catalyseur

caractérisé en ce que, en combinaison, d'une part l'entrée du brûleur catalytique (8) communique directement avec la sortie de l'injecteur (4), par un tube (5) de liaison continue et étanche, sauf au niveau dudit injecteur, où se situe le moyen d'entraînement (6) d'air primaire ; et d'autre part, des moyens (7) de freinage dynamique sont disposés en aval du brûleur catalytique (8), pour obtenir à la sortie (18b) de ce dernier, dans un plan axial (Fig. 5) passant par la direction de sortie du noyau (18) réfractaire, un profil de vitesse (20) différencié, présentant au moins un creux (20b) au voisinage de la face de sortie (18b) dudit noyau réfractaire (18), lesdits moyens de freinage dynamique (7) consistant en un obstacle placé en regard du débouché d'un ou plusieurs canaux (18c) du noyau (18).

3. Appareil chauffant, avec brûleur catalytique (8) d'un gaz combustible sous pression, comprenant successivement, dans le sens de circulation du gaz :

— un organe de contrôle (2) du courant gazeux ;

— un injecteur (4) éjectant un jet gazeux à partir du courant gazeux ;

— un moyen d'entraînement (6) d'air primaire par le jet gazeux, pour former un mélange à brûler ;

— ledit brûleur catalytique (8), comportant un noyau réfractaire (18), traversé selon la direction du mélange à brûler, de sa face d'entrée (18a) à sa face de sortie (18b), par une pluralité de canaux (18c) dont la surface interne est revêtue par un catalyseur

caractérisé en ce que, en combinaison, d'une part l'entrée du brûleur catalytique (8) communique directement avec la sortie de l'injecteur (4), par un tube (5) de liaison continue et étanche, sauf au niveau dudit injecteur, où se situe le moyen d'entraînement (6) d'air primaire ; et d'autre part, les canaux (18c) du noyau réfractaire (18) sont différenciés selon leur perte de charge, au moins un canal (18c) ayant une perte de charge relativement importante, pour obtenir à la sortie (18b) du noyau réfractaire (18), dans un plan axial (Fig.5) passant par la direction de sortie du noyau réfractaire (18), un profil de vitesse (20) différencié, présentant au moins un creux (20b) au voisinage de la face de sortie (18b) dudit noyau réfractaire (18).

4. Appareil selon l'une quelconque des revendications 1 à 3, caractérisé en ce que le creux de vitesse (20b) du profil de sortie du brûleur catalytique (8) est distribué selon une couronne, à distance de l'axe (21) de sortie dudit brûleur.

5. Appareil selon l'une quelconque des revendications 1 à 3, caractérisé en ce qu'un capuchon (9), pourvu d'orifices d'évacuation (9a) des gaz brûlés, ferme la sortie du brûleur catalytique (8).

6. Appareil selon la revendication 5, caractérisé en ce qu'un dispositif d'allumage (24) est disposé à l'intérieur du capuchon, en regard de la sortie (18b) du brûleur catalytique.

7. Appareil selon l'une quelconque des revendications 1 à 3, caractérisé en ce qu'une panne (10), par exemple pour la soudure, est en relation thermique avec le brûleur catalytique (8).

8. Appareil selon l'une quelconque des revendications 1 à 3, caractérisé en ce que le brûleur catalytique est disposé au sein d'une enveloppe extérieure (23), léchée par les gaz de combustion.

**Patentansprüche**

1. Heizvorrichtung mit katalytischem Brenner (8) für ein unter Druck stehendes brennbares Gas, in Zirkulationsrichtung des Gases nacheinander umfassend :

— ein Steuerelement (2) für den Gasstrom ;

— einen Injektor (4), der einen gasförmigen, von dem Gasstrom ausgehenden Strahl ausstößt ;

— eine Mitreißeinrichtung (6) für die Primärluft durch den gasförmigen Strahl, um ein brennbares Gemisch zu erhalten ;

— den katalytischen Brenner (8), der einen feuerfesten Kern (18) aufweist, welcher in Richtung des brennbaren Gemisches von seiner Eintrittsfläche (18a) bis zu seiner Austrittsfläche (18b) von mehreren Kanälen (18c) durchquert wird, dessen Innenfläche mit einem Katalysator ausgekleidet ist, **gekennzeichnet** durch die Kombination, daß einerseits der Eingang des katalytischen Brenners (8) direkt mit dem Ausgang des Injektors (4) durch ein ausgenommen in Höhe des Injektors durchgehendes und abgedichtetes Verbindungsrohr (5) verbunden ist, wo sich die Mitreißeinrichtung (6) der Primärluft befindet ; und andererseits dynamische Bremsmittel (7) stromaufwärts des katalytischen Brenners (8) angeordnet sind, um an dessen Ausgang (18b) in einer axialen, die Austrittsrichtung des feuerfesten Kerns (18) durchquerenden Richtung (Fig. 5) ein unterschiedliches Geschwindigkeitsprofil (20) zu erhalten, das nahe der Austrittsfläche (18b) des feuerfesten Kerns (18) wenigstens ein Wellental (20b) aufweist, die dynamischen Bremsmittel (7) eine in bezug auf die Eintrittsfläche (18a) des feuerfesten Kerns (18) quer angeordnete Schikane aufweisen, die einen vollständigen Abschnitt (7c), welcher dem Wellental (20b) des Geschwindigkeitsprofils (20) (am Ausgang des katalytischen Brenners) entspricht, und einen eingeschnittenen Abschnitt (7a, 7b) für den Durchtritt des brennbaren Gemisches durch den katalytischen Brenner (8) aufweist.

2. Heizvorrichtung mit katalytischem Brenner (8) für ein unter Druck stehendes brennbares Gas, in Zirkulationsrichtung des Gases nacheinander umfassend :

— ein Steuerelement (2) für den Gasstrom ;

— einen Injektor (4), der einen gasförmigen, von dem Gasstrom ausgehenden Strahl ausstößt ;

— eine Mitreißeinrichtung (6) für die Primärluft durch den gasförmigen Strahl, um ein brennbares Gemisch zu erhalten ;

— den katalytischen Brenner (8), den einen feuerfesten Kern (18) aufweist, welcher in Richtung des brennbaren Gemisches von seiner Eintrittsfläche (18a) bis zu seiner Austrittsfläche (18b) von mehreren Kanälen (18c) durchquert wird, dessen Innenfläche mit einem Katalysator ausgekleidet ist, **gekennzeichnet** durch die Kombination, daß einerseits der Eingang des katalytischen Brenners (8) direkt mit dem Ausgang des Injektors (4) durch ein ausgenommen in Höhe des Injektors durchgehendes und abgedichtetes Verbindungsrohr (5) verbunden ist, wo sich die Mitreißeinrichtung (6) der Primärluft befindet ; und andererseits dynamische Bremsmittel (7) stromabwärts des katalytischen Brenners (8) angeordnet sind, um an dessen Ausgang (18b) in einer axialen, die Austrittsrichtung des feuerfesten Kerns (18) durchquerenden Richtung (Fig. 5) ein unterschiedliches Geschwindigkeitsprofil (20) zu erhalten, das nahe der Austrittsfläche (18b) des feuerfesten Kerns (18) wenigstens ein Wellental (20b) aufweist, die dynamischen Bremsmittel (7) ein im Hinblick auf das Abströmen aus einem oder mehreren Kanälen (18c) des Kerns (18) angeordnetes Hindernis darstellen.

3. Heizvorrichtung mit katalytischem Bremmer (8) für ein unter Druck stehendes brennbares Gas, in Zirkulationsrichtung des Gases nacheinander umfassend :

— ein Steuerelement (2) für den Gasstrom ;

— einen Injektor (4), der einen gasförmigen, von dem Gasstrom ausgehenden Strahl ausstößt ;

— eine Mitreißeinrichtung (6) für die Primärluft durch den gasförmigen Strahl, um ein brennbares Gemisch zu erhalten ;

— den katalytischen Brenner (8), der einen feuerfesten Kern (18) aufweist, welcher in Richtung des brennbaren Gemisches von seiner Eintrittsfläche (18a) bis zu seiner Austrittsfläche (18b) von mehreren Kanälen (18c) durchquert wird, dessen Innenfläche mit einem Katalysator ausgekleidet ist, **gekennzeichnet** durch die Kombination, daß einerseits der Eingang des katalytischen Brenners (8) direkt mit dem Ausgang des Injektors (4) durch ein ausgenommen in Höhe des Injektors durchgehendes und abgedichtetes Verbindungsrohr (5) verbunden ist, wo sich die Mitreißeinrichtung (6) der Primärluft befindet ; und andererseits die Kanäle (18c) des feuerfesten Kerns (18) nach ihrem Chargenverlust unterschieden sind, wobei wenigstens ein Kanal (18c) einen relativ bedeutenden Chargenverlust aufweist, um am Ausgang (18b) des feuerfesten Kerns (18) in einer axialen, die Austrittsrichtung des feuerfesten Kerns (18) durchquerenden Richtung (Fig. 5) ein unterschiedliches Geschwindigkeitsprofil (20) zu erhalten, das nahe der Austrittsfläche (18b) des feuerfesten Kerns (18) wenigstens ein Wellental (20b) aufweist.

4. Vorrichtung nach einem der Ansprüche 1 bis 3, **dadurch gekennzeichnet,** daß das Geschwindigkeitswellental (20b) des Austrittsprofils des katalytischen Brenners (8) gemäß eines von der Austrittsachse (21) des Brenners beabstandeten Kranzes verteilt ist.

5. Vorrichtung nach einem der Ansprüche 1 bis 3, **dadurch gekennzeichnet,** daß eine mit Abzugskanälen (9a) für die Verbrennungsgase versehene Haube (9) den Auslaß des katalytischen Brenners (8) verechließt.

6. Vorrichtung nach Anspruch 5, **dadurch gekennzeichnet,** daß eine Zündeinrichtung (24) im Haubeninnenraum, dem Ausgang (18b) des katalytischen Brenners gegenüberliegend angeordnet ist.

7. Vorrichtung nach einem der Ansprüche 1 bis 3, **dadurch gekennzeichnet,** daß eine Spitze (10), beispielsweise zum Schweißen, mit dem katalytischen Brenner (8) in thermischer Verbindung steht.

8. Vorrichtung nach einem der Ansprüche 1 bis 3, **dadurch gekennzeichnet,** daß der katalytische Brenner innerhalb eines äußeren Gehäuses (23) angeordnet ist, das durch die Verbrennungsgase beaufschlagt ist.

## Claims

1. Heating device with a catalytic burner (8) of a pressurised fuel gas, comprising in succession, in the direction of circulation of the gas :

— a member (2) for controlling the gas stream ;

— an injector (4) ejecting a gas jet from the gas stream ;

— a means (6) for driving primary air via the gas jet, to form a combustion mixture ;

— the said catalytic burner (8) comprising a refractory core (18), through which passes in the direction of the combustion mixture, from its inlet face (18a) to its outlet face (18b), a plurality of channels (18c), the inner surface of which is covered with a catalyst, characterised in that, in combination, on the one hand the inlet of the catalytic burner (8) communicates directly with the outlet of the injector (4) via a junction pipe (5) continuous and sealed, except in the region of the said injector, where the primary-air drive means (6) is located ; and on the other hand, dynamic braking means (7) are arranged upstream of the catalytic burner (8), to obtain at the outlet (18b) of the latter, in an axial plane (Fig. 5) passing through the outlet direction of the refractory core (18), a differentiated speed profile (20) having at least one valley (20b) in the vicinity of the outlet face (18b) of the said refractory core (18), the said dynamic braking means (7) consisting of a baffle arranged transversely opposite the inlet face (18a) of the refractory core (18), the said baffle comprising a solid part (7c) corresponding (at the outlet of the catalytic burner) to the valley (20b) of the speed profile (20), and a perforated part (7a, 7b) for the passage of the combustion mixture towards the catalytic burner (8).

2. Heating device with a catalytic burner (8) of a pressurised fuel gas, comprising in succession, in the direction of circulation of the gas :
— a member (2) for controlling the gas stream ;
— an injector (4) ejecting a gas jet from the gas stream ;
— a means (6) for driving primary air via the gas jet, to form a combustion mixture ;
— the said catalytic burner (8) comprising a refractory core (18), through which passes in the direction of the combustion mixture, from its inlet face (18a) to its outlet face (18b), a plurality of channels (18c), the inner surface of which is covered with a catalyst, characterised in that, in combination, on the one hand the inlet of the catalytic burner (8) communicates directly with the outlet of the injector (4) via a junction pipe (5) continuous and sealed, except in the region of the said injector, where the primary-air drive means (6) is located ; and on the other hand, dynamic braking means (7) are arranged downstream of the catalytic burner (8), to obtain at the outlet (18b) of the latter, in an axial plane (Fig. 5) passing through the outlet direction of the refractory core (18), a differentiated speed profile (20) having at least one valley (20b) in the vicinity of the outlet face (18b) of the said refractory core (18), the said dynamic braking means (7) consisting of an obstacle placed opposite the mouth of one or more channels (18c) of the core (18).

3. Heating device with a catalytic burner (8) of a pressurised fuel gas, comprising in succession, in the direction of circulation of the gas :
— a member (2) for controlling the gas stream ;
— an injector (4) ejecting a gas jet from the gas stream ;
— a means (6) for driving primary air via the gas jet, to form a combustion mixture ;
— the said catalytic burner (8) comprising a refractory core (18), through which passes in the direction of the combustion mixture, from its inlet face (18a) to its outlet face (18b), a plurality of channels (18c), the inner surface of which is covered with a catalyst, characterised in that, in combination, on the one hand the inlet of the catalytic burner (8) communicates directly with the outlet of the injector (4) via a junction pipe (5) continuous and sealed, except in the region of the said injector, where the primary-air drive means (6) is located ; and on the other hand, the channels (18c) of the refractory core (18) are differentiated according to their pressure loss, at least one channel (18c) having a relatively high pressure loss, to obtain at the outlet (18b) of the refractory core (18), in an axial plane (Fig. 5) passing through the outlet direction of the refractory core (18), a differentiated speed profile (20) having at least one valley (20b) in the vicinity of the outlet face (18b) of the said refractory core (18).

4. Device according to any one of Claims 1 to 3, characterised in that the speed valley (20b) of the outlet profile of the catalytic burner (8) is distributed annularly at a distance from the outlet axis (21) of the said burner.

5. Device according to any one of Claims 1 to 3, characterised in that a cap (9) equipped with burnt-gas discharge ports (9a) closes the outlet of the catalytic burner (8).

6. Device according to Claim 5, characterised in that an ignition device (24) is arranged inside the cap opposite the outlet (18b) of the catalytic burner.

7. Device according to any one of Claims 1 to 3, characterised in that a bit (10), for example for soldering, is in thermal relationship with the catalytic burner (8).

8. Device according to any one of Claims 1 to 3, characterised in that the catalytic burner is arranged within an outer casing (23) swept by the combustion gases.

FIG.1

FIG.2

FIG.3

FIG.4

FIG.5

FIG.6